# EUROPÄISCHE PATENTANMELDUNG

(11) **EP 0 670 443 A2**
(43) Veröffentlichungstag der Anmeldung: **06.09.1995**
(21) Anmeldenummer: 95108057.1
(22) Anmeldetag: 26.05.1995
(51) Int. Cl.: F16J 15/26, F16J 15/18

(54) **Anordnung zum Abdichten einer Wellendurchführung**

(71) Anmelder: Maag Pump Systems AG, CH-8023 Zürich (CH)
(72) Erfinder: Blume, Peter, Dr. Ing., CH-8051 Zürich (CH); Stehr, Roger, Dr. Ing., CH-8180 Bülach (CH)
(74) Vertreter: Troesch Scheidegger Werner AG

(57) **Zusammenfassung**

Eine Anordnung zum Abdichten einer Wellendurchführung durch eine Bohrung (9) in einer Gehäusewandung (7) weist mindestens zwei hintereinander, axial entlang der Welle (1) angeordnete und verschiebbare, je getrennt vorgespannte bzw. federbelastete Stopfbuchsringe bzw. -brillen (11, 13) auf, je zum Verspannen von innenliegenden Packungen (13, 17.

## Beschreibung

Die vorliegende Erfindung betrifft eine Anordnung zum Abdichten einer Wellendurchfuhrung durch eine Bohrung in einer Gehäusewandung sowie eine Wellendurchführung einer Pumpe.

Bei Durchführungen von Wellen, wie beispielsweise Antriebswellen von Pumpen und dgl., durch eine Bohrung in einer Gehäusewandung besteht das Problem der Abdichtung des mit einem Antrieb verbundenen Wellenzapfens. Insbesondere im Zusammenhang mit Zahnradpumpen, Vakuumpumpen und dgl. ist eine Reihe von Lösungen und Vorschlägen bekannt, um eine Wellendurchführung aus einer Bearbeitungskammer gegen aussen hin abzudichten.

So ist es beispielsweise bekannt, dass bei Stopfbuchspackungen für die Abdichtung von Wellendurchführungen stets der, der Spannvorrichtung nächstgelegene Dichtungsring am stärksten durch das Spannen der Dichtungsringe deformiert wird. Dies führt zu der bekannten Empfehlung, nicht mehr als zwei Dichtungsringe hintereinander in einer Stopfbuchspackung vorzusehen.

Im Falle von Kombinationsdichtungen, wie beispielsweise in der DE-31 35 037 beschrieben, d.h. insbesondere bei Pumpen, deren Saugdruck kleiner als der Normaldruck ist, wird eine Sperrung mit Sperrflüssigkeit gefordert. Dies macht eine Anordnungskombination der Stopfbuchspackungen erforderlich, die mindestens zwei Dichtringe vor und zwei nach einem Ringraum für das Sperrmedium vorsieht. Hierbei lassen sich aus stopfbuchstypischen Gründen die beiden Dichtringe hinter dem Ringraum bzw. Verteilring nicht mehr optimal verspannen. Zudem besteht das Problem der Kommunikation zwischen dem Ringraum bzw. dem Verteilring und einer Zuführleitung, welche den Ringraum mit einem Vorratsbehälter für die Sperrflüssigkeit verbindet.

In der DE-41 07 586 wird eine Zweieranordnung von Stopfbuchsringen mit relativer Verspannung beschrieben, um Toträume zu vermeiden. Das oben angeführte Problem jedoch wird nicht aufgegriffen. Im speziellen geht es darum, die Anordnung, Stopfbuchsringe, Ringraum und Stopfbuchsringe - hier im speziellen elastische Dichtungsringe - durch einen Stopfbuchsring zu pressen.

Es ist daher eine Aufgabe der vorliegenden Erfindung, eine Abdichtung mit mindestens zwei Stopfbuchspackungen vorzuschlagen, je eine vor und eine nach einem ein Sperrmedium beinhaltenden Ringraum angeordnet, welche beide optimal verspannbar sind, wobei gleichzeitig der Ringraum stets mit einer den Ringraum mit Sperrmedium versehenden Bohrung verbunden bleibt.

Erfindungsgemäss wird die gestellte Aufgabe mittels einer Anordnung gemäss dem Wortlaut nach Anspruch 1 gelost.

Vorgeschlagen wird, dass die Anordnung zum Abdichten einer Wellendurchführung durch eine Bohrung in einer Gehäusewandung mindestens zwei hintereinander axial entlang der Welle angeordnete und verschiebbare, je getrennt federbelastete Stopfbuchsringe bzw. -brillen aufweist, um je innenliegende Packungen verspannen zu können. Diese beiden Stopfbuchsringe bzw. -brillen sind vorzugsweise gegen die Gehäusewandung, wie beispielsweise einen Pumpendeckel, federbelastet vorgespannt.

Die erfindungsgemäss definierte Anordnung umfasst eine erste Stopfbuchsbrille, welche vorgespannt mit der Gehäusewandung, wie beispielsweise dem Pumpendeckel oder der Gehäusewandung einer Misch- oder Knetmaschine, verbunden ist, um eine erste, innenliegende Packung, bestehend aus einem oder mehreren Packungsringen, dichtend zu verspannen. Ein zweiter Stopfbuchsring bzw. eine zweite -brille ist federbelastet vorgespannt mit dem ersten Stopfbuchsring bzw. der ersten Stopfbuchsbrille verbunden, um so eine zweite Stopfbuchspackung, wiederum bestehend aus einem oder mehreren Dichtungsringen, zu verspannen. Dadurch wird es möglich, die beiden Stopfbuchsringe bzw. -brillen unabhängig voneinander vorzuspannen, wodurch es ebenfalls möglich wird, die beiden Stopfbuchspakkungen unabhängig voneinander zu spannen bzw. zu verspannen. Dabei umfassen die beiden Stopfbuchspackungen vorzugsweise je zwei Dichtringe.

Im Bereich des ersten Stopfbuchsringes bzw. der ersten Stopfbuchsbrille ist ein an die Welle angrenzender Ringraum zur Bildung eines Spülringes vorgesehen, um mit einem Sperrmedium versorgt zu werden. Das Anordnen des Ringraumes innerhalb der ersten Stopfbuchsbrille bzw. des ersten Stopfbuchsringes ergibt den Vorteil, dass der Ringraum keine Relativverschiebung gegenüber einer ihn mit Sperrmedium versorgenden Bohrung ausführt, weshalb die Sperrfunktion auch bei sehr, gegebenenfalls zu stark angezogenen Stopfbuchspackungen gewährleistet bleibt. Dies ist insbesondere ein gewichtiger Vorteil, verglichen mit der Anordnung, beschrieben in der DE-31 35 037.

Die erfindungsgemäss beanspruchten Anordnungen zum Abdichten sind insbesondere geeignet für Wellendurchführungen bei Pumpen, wie beispielsweise Zahnradpumpen oder Vakuumpumpen. Aber auch Wellendurchführungen bei Knet- oder Mischmaschinen können mit einer erfindungsgemässen Abdichtungsanordnung versehen werden.

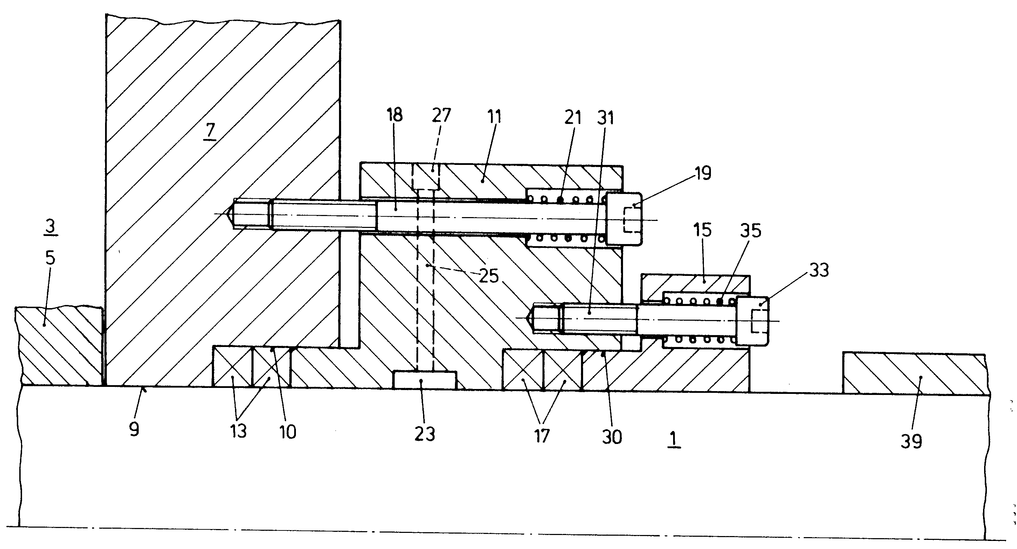

Die Erfindung wird nun anschliessend beispielsweise anhand der beigefügten Figur näher erläutert.

Diese zeigt im Längsschnitt eine erfindungsgemässe Anordnung zum Abdichten einer Wellendurchführung.

Eine Welle 1, wie beispielsweise eine Antriebswelle für eine Knet- oder Mischmaschine, eine Zahnradpumpe und dgl. wird durch eine Bohrung 9 einer Gehausewandung 7 geführt, welche Gehäusewandung einen Bearbeitungsraum 3 einschliesst für das Durchführen eines Bearbeitungsprozesses. In der Regel handelt es sich dabei um die Bearbeitung eines viskosen Mediums, wie beispielsweise das Pumpen, Kneten oder Mischen eines newtonischen oder nichtnewtonischen Fluids, insbesondere einer flüssigen, polymeren Masse. Schematisch ist an der Welle 1 ein Bearbeitungsaggregat 5 angedeutet, wobei es sich beispielsweise um Wellengänge oder aber um ein Zahnrad handeln kann.

In einer um die Welle konzentrisch ausgebildeten Bohrung 10 in der Gehäusewand 7 ist eine erste Stopfbuchspackung 13 angeordnet, beispielsweise aufweisend zwei Packungsdichtringe. Diese erste Packung 13 ist mittels einer ersten, inneren Stopfbuchsbrille 11 verspannt, welche über eine Schraubverbindung 18 und 19 und eine Feder 21 vorgespannt mit der Gehäusewandung 7 verbunden ist. Innerhalb dieser inneren Stopfbuchsbrille 11, angrenzend an die Welle 1, ist ein Ringraum 23 angeordnet, vorgesehen, um mit einem Sperrmedium gefüllt zu werden. Der Ringraum 23 wird über eine Bohrung 25 bzw. einen nach aussen gerichteten Schlauchanschluss 27 mit dem Sperrmedium versorgt.

In einer weiteren, ebenfalls um die Welle konzentrischen Bohrung 30, innenliegend in der inneren Stopfbuchsbrille 11 angeordnet, ist eine weitere Stopfbuchspackung 17 vorgesehen, beispielsweise ebenfalls bestehend aus zwei Packungsdichtringen. Diese zweite Stopfbuchspackung 17 wird mittels einer äusseren Stopfbuchsbrille 15 verspannt, welche über eine Schraubverbindung 31 und 33 und eine Feder 35 vorgespannt mit der inneren Stopfbuchsbrille 11 verbunden ist.

Entgegengesetzt zum Bearbeitungsraum 3 ist die Welle 1 schlussendlich, beispielsweise mit einer Antriebsnabe 39 verbunden, mittels welcher die Welle für die Durchführung eines Bearbeitungsprozesses und für die Durchführung einer Rotationsbewegung angetrieben wird.

Der Vorteil der in der Figur dargestellten Abdichtungsanordnung liegt nun darin, dass die beiden Stopfbuchspackungen 13 und 17 individuell verspannt werden können. Je nach dem, wie stark die beiden Schraubverbindungen 18, 19 bzw. 31, 33 angezogen werden, sind die beiden Stopfbuchsbrillen je gegen die Gehäuswandung bzw. gegen die innere Stopfbuchsbrille vorgespannt. Entsprechend stark verspannt sind dann die beiden Stopfbuchspackungen. Ein weiterer Vorteil der erfindungsgemäss dargestellten Anordnung liegt darin, dass die ein Sperrmedium zuführende Bohrung 25 fest mit dem Ringraum 23 verbunden ist, und somit diese Verbindung vollständig unabhängig ist von der Stärke der Verspannung der beiden Stopfpackungsdichtungen.

Somit ist es mit der erfindungsgemäss dargestellten Anordnung möglich, die Verspannung der Stopfbuchspackungen an die jeweiligen Bearbeitungsbedingungen anzupassen, welche im Bearbeitungsraum 3 vorherrschen. Mit anderen Worten ist immer ein optimales Abdichten gewährleistet, unabhängig davon, ob ein hochviskoses, niedrigviskoses Material gefördert oder geknetet und gemischt wird, und auch unabhängig von den im Bearbeitungsraum herrschenden Druckverhältnissen bzw. Druckgefällen.

Bei der in der beigefügten Figur dargestellten Abdichtungsanordnung handelt es sich selbstverständlich nur um ein Ausführungsbeispiel, welches geeignet ist, die vorliegende Erfindung besser zu erläutern. Selbstverständlich ist es möglich, die Anordnung abzuändern, zu variieren oder zu ergänzen. So ist es beispielsweise möglich, eine zusätzliche Stopfbuchsbrille anzuordnen und auch die Anzahl der in den Packungen verwendeten Dichtungsringe zu variieren. So ist es möglich, anstelle der zwei Dichtungsringe auch nur eine Dichtung pro Packung anzuordnen. Auch ist es möglich, beispielsweise die äussere Stopfbuchsbrille, ebenfalls vorgespannt mit der Gehäuswandung, zu verbinden, anstelle des vorgespannten Verbindens mit der inneren Stopfbuchsbrille. Schlussendlich ist die Wahl geeigneter Materialien für die Herstellung der konstruktiven Elemente und auch die Wahl der verwendeten Materialien für die Dichtungsringe kein Thema der vorliegenden Erfindung, da diese Merkmale bestens aus dem Stand der Technik bekannt sind. Wesentlich ist, dass die Anordnung mindestens zwei hintereinander, entlang der Welle angeordnete, je getrennt vorgespannte Stopfbuchsbrillen aufweist, je zum Verspannen von innenliegenden Packungen.

## Patentansprüche

1. Anordnung zum Abdichten einer Wellendurchführung durch eine Bohrung in einer Gehäusewandung, gekennzeichnet durch mindestens zwei hintereinander, axial entlang der Welle (1) angeordnete und verschiebbare, je getrennt vorgespannte bzw. federbelastete Stopfbuchsringe bzw. -brillen (11, 13), je zum Verspannen von innenliegenden Packungen (13, 17).

2. Anordnung, insbesondere nach Anspruch 1, dadurch gekennzeichnet, dass die beiden Stopfbuchsringe bzw. -brillen gegen die Gehäusewandung vorgespannt, federbelastet sind.

3. Anordnung, insbesondere nach Anspruch 1, dadurch gekennzeichnet, dass der erste Stopfbuchsring bzw. die erste Stopfbuchsbrille vorgespannt mit der Gehausewandung verbunden ist, und der zweite Stopfbuchsring bzw. die zweite Stopfbuchsbrille federbelastet mit dem ersten Stopfbuchsring bzw. der ersten Stopfbuchsbrille verbunden ist.

4. Anordnung, insbesondere nach einem der Ansprüche 1 bis 3, dadurch gekennzeichnet, dass der erste Stopfbuchsring einen an die Welle angrenzenden Ringraum (23) aufweist, zur Bildung eines Spülringes.

5. Anordnung, insbesondere nach Anspruch 4, dadurch gekennzeichnet, dass durch den ersten Stopfbuchsring eine Bohrung (25) vorgesehen ist, kommunizierend mit dem Ringraum, um den Ringraum mit einem Sperrmedium zu beaufschlagen.

6. Anordnung, insbesondere nach einem der Ansprüche 1 bis 5, dadurch gekennzeichnet, dass die beiden Stopfbuchspackungen je mindestens einen Dichtring umfassen.

7. Anordnung, insbesondere nach einem der Ansprüche 1 bis 6, dadurch gekennzeichnet, dass die beiden Stopfbuchspackungen je mindestens zwei Dichtringe umfassen.

8. Anordnung, insbesondere nach einem der Ansprüche 1 bis 7, dadurch gekennzeichnet, dass die beiden Stopfbuchsringe bzw. -brillen unabhängig voneinander vorspannbar sind, um die beiden Packungen unabhängig voneinander zu spannen bzw. zu verspannen.

9. Wellendurchführung einer Pumpe, wie einer Zahnrad- oder Vakuumpumpe, mit einer Anordnung nach einem der Ansprüche 1 bis 8.
